# EUROPÄISCHE PATENTSCHRIFT

(11) **EP 2 746 088 B1**
(45) Veröffentlichungstag und Bekanntmachung des Hinweises auf die Patenterteilung: **15.04.2015**
(21) Anmeldenummer: 12197878.7
(22) Anmeldetag: 18.12.2012
(51) Int. Cl.: B60K 15/04, B60K 15/05, B60K 15/035

(54) **Abdeckeinrichtung**
Covering device
Dispositif de recouvrement

(43) Veröffentlichungstag der Anmeldung: 25.06.2014
(73) Patentinhaber: SMR Patents S.à.r.l., 1653 Luxembourg (LU)
(72) Erfinder: Nyírvári, József, 9700 Szombathely (HU); Molnár, Sándor, 4220 Hajdúböszörmény (HU)
(74) Vertreter: Weber-Bruls, Dorothée

(56) Entgegenhaltungen:
- FR-A1- 2 836 427
- US-A- 5 954 387
- US-A1- 2009 189 410

## Beschreibung

Die Erfindung betrifft eine Abdeckeinrichtung für eine Tankeinheit eines Kraftfahrzeugs mit den Merkmalen des Oberbegriffs des Anspruchs 1. Darüber hinaus betrifft die Erfindung eine Tankeinheit mit einer derartigen Abdeckeinrichtung sowie ein Kraftfahrzeug mit einer derartigen Tankeinheit und/oder mit einer derartigen Abdeckeinrichtung.

Eine gattungsgemäße Abdeckeinrichtung ist bekannt aus US 2009/0189410 A1 und FR 2 836 427 A1.

Eine nicht gattungsgemäße Abdeckeinrichtung ist bekannt aus DE 11 2008 003 238 T5, bei der axial an einer Tanköffnung ein Dichtmittel angeordnet ist, das am Abdeckelement in einer geschlossenen Funktionsstellung anliegt. Hierbei hat es sich als nachteilig herausgestellt, dass Staub oder Schmutz durch einen Spalt zwischen Abdeckelement und Tankeinheit unterhalb des Abdeckelements gelangen kann.

Aufgabe der Erfindung ist, eine Abdeckeinrichtung vorzuschlagen, bei der ein Eindringen von Staub oder Schmutz zwischen Abdeckelement und Tankeinheit zumindest reduziert ist.

Diese Aufgabe wird durch eine eingangs genannte Abdeckeinrichtung mit den Merkmalen des kennzeichnenden Teils des Anspruchs 1 gelöst.

Dadurch, dass am Abdeckelement ein Dichtelement vorgesehen ist, das einen zwischen Abdeckelement und Tanköffnung bestehenden und quer oder schräg zur Tanköffnung erstreckten und zur Tanköffnung beabstandeten Spalt verschließt, ist einem Eindringen von Staub oder Schmutz vorgebeugt. Dadurch, dass das Dichtelement am Abdeckelement angeordnet ist, bilden Abdeckelement und Dichtmittel eine vormontierbare Einheit, bei der das Dichtmittel auf einfache Weise am Abdeckelement festlegbar oder festgelegt ist.

Darüber hinaus ist es denkbar, dass das Dichtmittel die Tanköffnung in der geschlossenen Funktionsstellung in Gänze oder zumindest abschnittsweise umgibt.

Wenn das Dichtmittel die Tanköffnung in Gänze umgibt, stellt das Dichtmittel einen guten Schutz gegen das Eindringen von Schmutz oder Staub dar. Wenn das Dichtmittel die Tanköffnung abschnittsweise umgibt, kann das Dichtmittel beispielsweise an weiteren Komponenten der Abdeckeinrichtung oder der Tankeinheit anliegen, so dass diese Komponenten funktional zur Dichtwirkung des Dichtmittels beitragen.

Ferner ist es denkbar, dass das mindestens eine Dichtmittel in der geschlossenen Funktionsstellung mit seinem freien, dem Abdeckelement abgewandten Ende an der Tankeinheit anliegt oder zur Tankeinheit beabstandet ist.

Das Dichtmittel kann grundsätzlich beliebig gebildet sein. Beispielsweise kann es schwammartig ausgebildet sein. Es erweist sich als vorteilhaft, wenn das Dichtmittel ein Flachmaterial umfasst, das mit einer Breitseite quer oder schräg von der Ebene des Flächenhaften Abdeckelements wegerstreckt ist. Solchenfalls ist das Dichtmittel lippenartig ausgebildet.

Das Dichtmittel kann starr oder elastisch verformbar sein.

In Weiterbildung letztgenannten Erfindungsgedankens erweist es sich als vorteilhaft, wenn das Dichtmittel mit seiner Breitseite zumindest abschnittsweise an einem die Tanköffnung umgebenden Randelement der Tankeinheit von innen oder von außen anliegt. Hierdurch überlappt das Dichtmittel - quer oder schräg zur Tanköffnung betrachtet - das Randelement.

Das Randelement kann einen Kunststoff umfassen. Er kann elastisch verformbar ausgebildet sein, wodurch die Dichtwirkung in der geschlossenen Funktionsstellung erhöht ist.

Bei einer Ausführungsform der erfindungsgemäßen Abdeckeinrichtung erweist es sich als vorteilhaft, wenn das mindestens eine Dichtmittel ein äußeres Dichtmittel, das in der geschlossenen Funktionsstellung am Randelement anliegt, und mindestens ein inneres Dichtmittel, das in der geschlossenen Funktionsstellung unmittelbar an der Tanköffnung und/oder an dem Verschlussmittel anliegt, umfasst.

Dadurch ist die Dichtwirkung der Abdeckeinrichtung weiter erhöht und die Gefahr eines Eindringen von Schmutz oder Staub weiter reduziert.

Das Dichtmittel kann grundsätzlich ein beliebiges Material umfassen, beispielsweise ein Gewebe oder dergleichen. Es erweist sich jedoch als kostengünstig, wenn das Dichtmittel einen Kunststoff oder ein Gummi, umfasst. Darüber hinaus kann das Dichtmittel aus dem gleichen Material wie das Abdeckelement gebildet sein. Solchenfalls können Abdeckelement und Dichtmittel als Spritzgussteil einfach hergestellt werden.

Darüber hinaus ist es denkbar, dass das Dichtmittel an einer beliebigen Stelle des Abdeckelements angeordnet ist. Um die Gefahr eines Eindringens von Staub oder Schmutz in den zwischen Abdeckelement und Tankeinheit gebildeten Hohlraum zu reduzieren, erweist es sich als vorteilhaft, wenn das Dichtmittel am Rand des flächenhaften Abdeckelements angeordnet ist.

Grundsätzlich ist es denkbar, dass das Abdeckelement auf beliebige Weise von der geöffneten Funktionsstellung in die geschlossene Funktionsstellung und wieder zurück überführt werden kann. Es erweist sich als einfach und kostengünstig, wenn die Abdeckeinrichtung mindestens ein Führungsmittel umfasst, das einerseits am Abdeckelement und andererseits an der Tankeinheit oder einem Karosserieelement festlegbar oder festgelegt ist, und das das Überführen des Abdeckelements von der geschlossenen Funktionsstellung in die geöffnete Funktionsstellung führt.

Das Führungsmittel lässt sich einfach ausführen, wenn das Führungsmittel ein Scharnier und/oder Gelenk umfasst, mit dem das Abdeckelement von der geschlossenen Funktionsstellung in die geöffnete Funktionsstellung klappbar, insbesondere drehbar ist.

Ferner wird die Aufgabe gelöst durch eine Tankeinheit eines Kraftfahrzeugs mit mindestens einer Tanköffnung, insbesondere mit einem der zuvor genannten Merkmale, mit mindestens einem die Tanköffnung verschließenden Verschlussmittel und mit mindestens einer Abdeckeinrichtung die mindestens ein flächenhaftes Abdeckelement umfasst, das von einer geschlossenen Funktionsstellung, in der das Abdeckelement die Tanköffnung und/oder das die Tanköffnung verschließende Verschlussmittel überfängt, in eine geöffnete Funktionsstellung, in der die Tanköffnung und/oder das Verschlussmittel von außen zugänglich ist, überführbar ist und die mindestens ein Dichtmittel umfasst, durch das ein in der geschlossenen Funktionsstellung zwischen Abdeckelement und Tanköffnung bestehender und quer oder schräg zur Tanköffnung erstreckter Spalt verschließbar oder verschlossen ist, wobei das Dichtmittel am Abdeckelement angeordnet ist.

Schließlich wird die Aufgabe gelöst durch ein Kraftfahrzeug mit mindestens einer Tankeinheit, insbesondere mit einem der zuvor genannten Merkmale, und/oder mit mindestens einer Abdeckeinrichtung, insbesondere mit einem der zuvor genannten Merkmale.

Die erfindungsgemäße Abdeckeinrichtung, die erfindungsgemäße Tankeinheit sowie das erfindungsgemäße Kraftfahrzeug erweisen sich in mehrfacher Hinsicht als vorteilhaft:

Dadurch, dass am Abdeckelement ein Dichtmittel vorgesehen ist, das einen zwischen Abdeckelement und Tanköffnung bestehenden und quer oder schräg zur Tanköffnung erstreckten und beabstandeten Spalt verschließt, ist die Gefahr eines Eindringens von Schmutz oder Staub zumindest reduziert.

Die Gefahr eines Eindringens von Staub und Verschmutzung ist weiter reduziert, wenn das mindestens eine Dichtmittel ein äußeres Dichtmittel und ein inneres Dichtmittel umfasst.

Vibrationen sind reduziert, wenn sich die Abdeckeinrichtung mit einem Stützmittel an der Tanköffnung oder Verschlussmittel abstützt.

Weitere Merkmale, Einzelheiten sowie Vorteile der Erfindung entnehmen sich aus den beigefügten Patentansprüchen, aus den zeichnerischen Darstellungen und nachfolgender Beschreibung einer bevorzugte Ausführungsform einer erfindungsgemäßen Abdeckeinrichtung sowie einer erfindungsgemäßen Tankeinheit für ein Kraftfahrzeug.

In der Zeichnung zeigt:
- Figur 1: eine geschnittene Seitenansicht durch eine erste Ausführungsform der erfindungsgemäße Abdeckeinrichtung;
- Figur 2: eine geschnittene Seitenansicht durch eine zweite Ausführungsform der erfindungsgemäße Abdeckeinrichtung;
- Figur 3: eine Unteransicht auf die erfindungsgemäße Abdeckeinrichtung gemäß Figur 1.

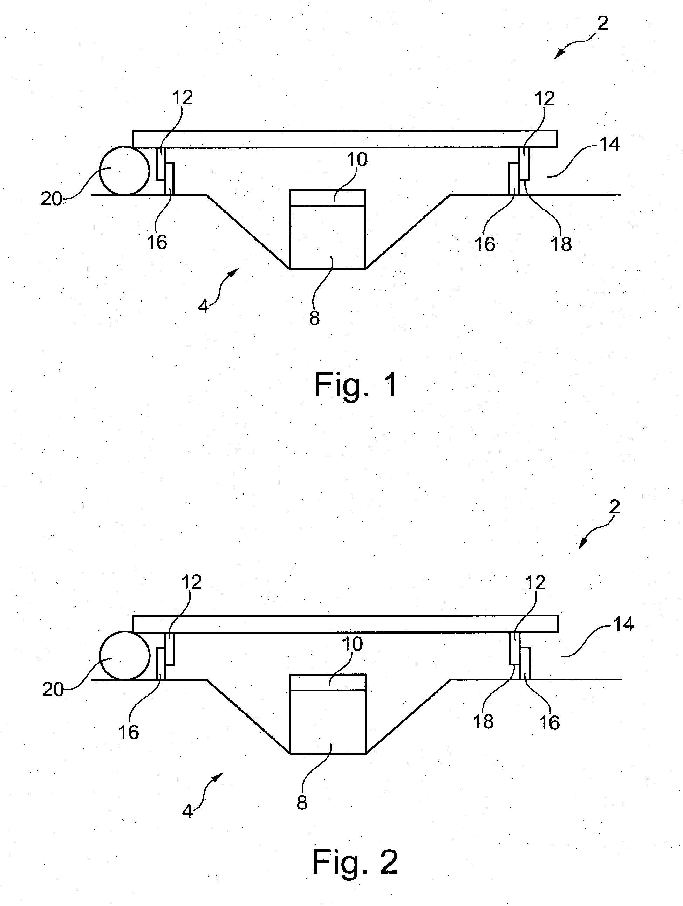

Die Figuren zeigen eine insgesamt mit dem Bezugszeichen 2 versehene Abdeckeinrichtung für eine Tankeinheit 4 eines Kraftfahrzeugs. Die Abdeckeinrichtung 2 umfasst ein flächenhaftes Abdeckelement 6, das in Figur 1 in seiner geschlossenen Funktionsstellung gezeigt ist. In der geschlossenen Funktionsstellung überfängt das Abdeckelement 6 eine Tanköffnung 8 sowie ein die Tanköffnung 8 verschließendes Verschlussmittel 10. Darüber hinaus ist bei der in Figur 1 dargestellten Abdeckeinrichtung 2 ein Dichtmittel 12 am Abdeckelement 6 angeordnet. Dieses verschließt einen zwischen dem Abdeckelement 6 und der Tanköffnung 8 bestehenden Spalt 14, der quer zur Tanköffnung 8 erstreckt und zur Tanköffnung 8 beabstandet ist.

Bei dem in Figur 1 gezeigten Ausführungsbeispiel ist das Dichtmittel 12 derart ausgebildet, dass es die Tanköffnung 8 in der geschlossenen Funktionsstellung in Gänze umgibt. Hierzu ist das Dichtmittel 12 aus einem Flachmaterial gebildet, das mit einer Breitseite 14 quer zur Ebene des flächenhaften Abdeckelements 6 erstreckt ist.

Bei dem Ausführungsbeispiel gemäß Figur 1 liegt das Dichtmittel 12 mit seiner Breitseite 15 an einem die Tanköffnung 8 umgebenden Randelement 16 von außen an. Hierbei ist das Dichtmittel 12 mit einem freien, dem Abdeckelement 6 abgewandten Ende 18 zur Tankeinheit 4 beabstandet.

Um das Abdeckelement 6 von der geschlossenen Funktionsstellung in eine geöffnete Funktionsstellung zu überführen, in der die Tanköffnung 8 und/oder das Verschlussmittel 10 von außen zugänglich ist, umfasst die Abdeckeinrichtung 2 ein Führungsmittel 20, durch dass das Abdeckelement 6 in die geöffnete Funktionsstellung drehbar ist.

Figur 2 zeigt ein zweites Ausführungsbeispiel bei dem Dichtmittel 12 mit seiner Breitseite 15 an einem die Tanköffnung 8 umgebenden Randelement 16 von innen anliegt.

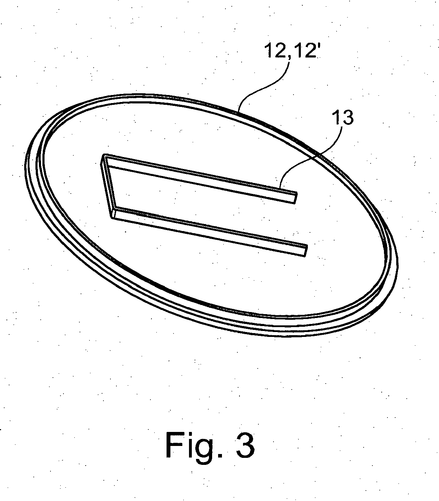

Figur 3 zeigt eine Draufsicht auf die Abdeckeinrichtung 2 gemäß Figur 1. Hierbei ist ersichtlich, dass das mindestens eine Dichtmittel 12 ein äußeres Dichtmittel 12' umfasst, das an dem Randelement 16 der Tankeinheit 4 anliegt.

Ferner umfasst das Abdeckelement 6 ein Stützmittel 13, das an der Tanköffnung 8 anliegt.

Die in der vorstehenden Beschreibung, in den Ansprüchen, sowie in den Zeichnungen gezeigten Merkmale der Erfindung können sowohl einzeln, als auch in jeder beliebigen Kombination in der Verwirklichung der Erfindung und ihren verschiedenen Ausführungsformen wesentlich sein.

### Bezugszeichenliste

- 2: Abdeckeinrichtung
- 4: Tankeinheit
- 6: Abdeckelement
- 8: Tanköffnung
- 10: Verschlussmittel
- 12: Dichtmittel
- 12': äußeres Dichtmittel
- 13: Stützmittel
- 14: Spalt
- 15: Breitseite
- 16: Randelement
- 18: freies Ende
- 20: Führungsmittel

## Patentansprüche

1. Abdeckeinrichtung (2) für eine Tankeinheit (4) eines Kraftfahrzeugs, mit mindestens einem flächenhaften Abdeckelement (6), das von einer geschlossenen Funktionsstellung, in der das Abdeckelement (6) eine Tanköffnung (8) der Tankeinheit (4) und/oder ein die Tanköffnung (8) verschließendes Verschlussmittel (10) der Tankeinheit (4) überfängt, in eine geöffnete Funktionsstellung, in der die Tanköffnung (8) und/oder das Verschlussmittel (10) von außen zugänglich ist, überführbar ist, und mit mindestens einem Dichtmittel (12) durch das ein in der geschlossenen Funktionsstellung zwischen Abdeckelement (6) und Tankeinheit (4) bestehender und quer oder schräg zur Tanköffnung (8) erstreckter und zur Tanköffnung (8) beabstandeter Spalt (14) verschließbar oder verschlossen ist, wobei
das Dichtmittel (12) am Abdeckelement (6) und derart angeordnet ist, dass ein zur Tanköffnung (8) beabstandeter Spalt (14) verschließbar oder verschlossen ist, **dadurch gekennzeichnet, dass** das-Abdeckelement (6) ein rippenartiges Stützmittel (13) umfasst, das in der geschlossenen Funktionsstellung an der Tanköffnung (8) abstützt ist.

2. Abdeckeinrichtung (2) nach Anspruch 1, **dadurch gekennzeichnet, dass**
das Dichtmittel (12) die Tanköffnung (8) in der geschlossenen Funktionsstellung in Gänze oder zumindest abschnittsweise umgibt.

3. Abdeckeinrichtung (2) nach Anspruch 1 oder 2, **dadurch gekennzeichnet, dass**
das mindestens eine Dichtmittel (12) in der geschlossenen Funktionsstellung mit seinem freien, dem Abdeckelement (6) abgewandten Ende an der Tankeinheit (4) anliegt oder zur Tankeinheit (4) beabstandet ist.

4. Abdeckeinrichtung (2) nach mindestens einem der vorhergehenden Ansprüche,
**dadurch gekennzeichnet, dass**
das Dichtmittel (12) ein Flachmaterial umfasst, das mit einer Breitseite (15) quer oder schräg von der Ebene des flächenhaften Abdeckelements (6) wegerstreckt ist.

5. Abdeckeinrichtung (2) nach Anspruch 4, **dadurch gekennzeichnet, dass**
das Dichtmittel (12) mit seiner Breitseite (15) zumindest abschnittsweise an einem die Tanköffnung (8) umgebenen Randelement (16) der Tankeinheit (4) von innen oder von außen anliegt.

6. Abdeckeinrichtung (2) nach mindestens einem der vorhergehenden Ansprüche,
**dadurch gekennzeichnet, dass**
das mindestens eine Dichtmittel (12) ein äußeres Dichtmittel (12'), das in der geschlossenen Funktionsstellung am Randelement (16) anliegt, und mindestens ein inneres Dichtmittel (12''), das in der geschlossenen Funktionsstellung unmittelbar an der Tanköffnung (8) und/oder an dem Verschlussmittel (10) anliegt, umfasst.

7. Abdeckeinrichtung (2) nach mindestens einem der vorhergehenden Ansprüche,
**dadurch gekennzeichnet, dass**
das Dichtmittel (12) einen Kunststoff oder ein Gummi umfasst.

8. Abdeckeinrichtung (2) nach mindestens einem der vorhergehenden Ansprüche,
**dadurch gekennzeichnet, dass**
das Dichtmittel (12) am Rand des flächenhaften Abdeckelements (6) angeordnet ist.

9. Abdeckeinrichtung (2) nach mindestens einem der vorhergehenden Ansprüche,
**gekennzeichnet durch**
mindestens ein Führungsmittel (20), das einerseits am Abdeckelement (6) und andererseits an der Tankeinheit (4) oder einem Karosserieelement festlegbar oder festgelegt ist, und das das Überführen des Abdeckelements (6) von der geschlossenen Funktionsstellung in die geöffnete Funktionsstellung führt.

10. Abdeckeinrichtung (2) nach Anspruch 9, **dadurch gekennzeichnet, dass**
das Führungsmittel (20) ein Scharnier und/oder Gelenk umfasst, mit dem das Abdeckelement (6) von der geschlossenen Funktionsstellung in die geöffnete Funktionsstellung klappbar, insbesondere drehbar ist.

11. Tankeinheit (4) eines Kraftfahrzeugs mit mindestens einer Tanköffnung (8), mit mindestens einem die Tanköffnung (8) verschließenden Verschlussmittel (10) und mit mindestens einer Abdeckeinrichtung (2) nach einem der Ansprüche 1 bis 10, die mindestens ein flächenhaftes Abdeckelement (6) umfasst, das von einer geschlossenen Funktionsstellung, in der das Abdeckelement (6) die Tanköffnung (8) und/oder das die Tanköffnung (8) verschließende Verschlussmittel (10) überfängt, in eine geöffnete Funktionsstellung, in der die Tanköffnung (8) und/oder das Verschlussmittel (10) von außen zugänglich ist, überführbar ist und die mindestens ein Dichtmittel (12) umfasst, durch das ein in der geschlossenen Funktionsstellung zwischen Abdeckelement (6) und Tanköffnung (8) bestehender und quer oder schräg zur Tanköffnung (8) erstreckter Spalt (14) verschließbar oder verschlossen ist, **dadurch gekennzeichnet, dass** das Dichtmittel (12) am Abdeckelement (6) angeordnet ist.

12. Kraftfahrzeug mit mindestens einer Tankeinheit (4) nach Anspruch 11, mit mindestens einer Abdeckeinrichtung (2) nach einem der Ansprüche 1 bis 10.

## Claims

1. A covering device (2) for a tank unit (4) of a motor vehicle, comprising at least one flat covering element (6) which can be moved from a closed functional position, in which the covering element (6) covers a tank opening (8) of the tank unit (4) and/or a closure means (10) of the tank unit (4) which closes the tank opening (8), into an open functional position, in which the tank opening (8) and/or the closure means (10) is accessible from outside, and comprising at least one sealing means (12) by which a gap (14), which in the closed functional position exists between the covering element (6) and the tank unit (4) and extends transversely or at an angle to the tank opening (8) and is at a distance from the tank opening (8), can be or is closed, **wherein**
the sealing means (12) is arranged on the covering element (6) and in such a way that a gap (14) at a distance from the tank opening (8) can be or is closed, **characterized in that** the covering element (6) comprises a rib-like support means (13) which in the closed functional position is supported against the tank opening (8).

2. The covering device (2) according to claim 1, **characterized in that**
the sealing means (12), in the closed functional position, surrounds the tank opening (8) entirely or at least in part.

3. The covering device (2) according to claim 1 or 2, **characterized in that**
the at least one sealing means (12), in the closed functional position, bears against the tank unit (4) with its free end remote from the covering element (6) or is spaced apart from the tank unit (4).

4. The covering device (2) according to at least one of the preceding claims,
**characterized in that**
the sealing means (12) comprises a flat material which extends with a broad side (15) transversely or at an angle away from the plane of the flat covering element (6).

5. The covering device (2) according to claim 4, **characterized in that**
the sealing means (12) bears from inside or from outside with its broadside (15) at least in some sections against a rim element (16) of the tank unit (4) that surrounds the tank opening (8).

6. The covering device (2) according to at least one of the preceding claims,
**characterized in that**
the at least one sealing means (12) comprises an outer sealing means (12'), which in the closed functional position bears against the rim element (16), and at least one inner sealing means (12"), which in the closed functional position bears directly against the tank opening (8) and/or against the closure means (10).

7. The covering device (2) according to at least one of the preceding claims,
**characterized in that**
the sealing means (12) comprises a plastic or a rubber.

8. The covering device (2) according to at least one of the preceding claims,
**characterized in that**
the sealing means (12) is arranged at the edge of the flat covering element (6).

9. The covering device (2) according to at least one of the preceding claims,
**characterized by**
at least one guide means (20) which can be or is fixed at one side to the covering element (6) and at the other side to the tank unit (4) or a body element, and which guides the movement of the covering element (6) from the closed functional position into the open functional position.

10. The covering device (2) according to claim 9, **characterized in that**
the guide means (20) comprises a hinge and/or articulation, by which the covering element (6) can be folded, in particular rotated, from the closed functional position into the open functional position.

11. A tank unit (4) of a motor vehicle, comprising at least one tank opening (8), comprising at least one closure means (10) which closes the tank opening (8), and comprising at least one covering device (2) according to any of claims 1 to 10 which comprises at least one flat covering element (6) which can be moved from a closed functional position, in which the covering element (6) covers the tank opening (8) and/or the closure means (10) which closes the tank opening (8), into an open functional position, in which the tank opening (8) and/or the closure means (10) is accessible from outside, and which comprises at least one sealing means (12) by which a gap (14), which in the closed functional position exists between the covering element (6) and the tank opening (8) and extends transversely or at an angle to the tank opening (8), can be or is closed, **characterized in that** the sealing means (12) is arranged on the covering element (6).

12. A motor vehicle comprising at least one tank unit (4) according to claim 11, comprising at least one covering device (2) according to any of claims 1 to 10.

## Revendications

1. Dispositif de recouvrement (2) destiné à une unité de réservoir(4) d'un véhicule, ayant au moins un élément de recouvrement de forme plane (6), qui peut être déplacé depuis une position fonctionnelle fermée, dans laquelle l'élément de recouvrement (6) coiffe une ouverture de réservoir (8) de l'unité de réservoir (4) et/ou des moyens d'obturation (10) obturant l'ouverture de réservoir (8) de l'unité de réservoir(4), jusque dans une position fonctionnelle ouverte, dans laquelle l'ouverture de réservoir(8) et/ou les moyens d'obturation (10) sont accessibles depuis l'extérieur, et ayant au moins un dispositif d'étanchéité (12) par l'intermédiaire duquel, dans la position fonctionnelle fermée, un espace (14) situé entre l'élément de recouvrement (6) et l'unité de réservoir (4), et s'étendant transversalement ou en biais par rapport à l'ouverture de réservoir (8), et à distance de l'ouverture de réservoir (8), peut être ou est fermé, dans lequel le dispositif d'étanchéité (12) est agencé au niveau de l'élément de recouvrement (6), de telle sorte qu'un espace (14) situé à distance de l'ouverture de réservoir(8) peut être ou est fermé.

2. Dispositif de recouvrement (2) selon la revendication 1, **caractérisé en ce que**
le dispositif d'étanchéité (12) entoure l'ouverture de réservoir(8) dans la position fonctionnelle fermée, totalement ou au moins partiellement.

3. Dispositif de recouvrement (2) selon la revendication 1 ou 2, **caractérisé en ce que**
le au moins un dispositif d'étanchéité (12), dans la position fonctionnelle fermée, appuie contre l'unité de réservoir (4) au moyen de son extrémité opposée à l'élément de recouvrement (6), ou est à distance de l'unité de réservoir(4).

4. Dispositif de recouvrement (2) selon au moins l'une des revendications précédentes, **caractérisé en ce que**
le dispositif d'étanchéité (12) comportant un matériau en feuille qui, avec un grand côté (15), s'éloigne, transversalement ou en biais, du plan de l'élément de recouvrement de forme plane (6).

5. Dispositif de recouvrement (2) selon la revendication 4, **caractérisé en ce que**
le dispositif d'étanchéité (12), avec son grand côté (15), appuie sur un élément de bord (16) de l'unité de réservoir (4) entourant au moins partiellement l'ouverture de réservoir(8), depuis l'intérieur ou depuis l'extérieur.

6. Dispositif de recouvrement (2) selon au moins l'une des revendications précédentes, **caractérisé en ce que**
le au moins un dispositif d'étanchéité (12) comporte un dispositif d'étanchéité extérieur (12') qui, dans la position fonctionnelle fermée, appuie sur l'élément de bord (16), et au moins un dispositif d'étanchéité intérieur (12") qui, dans la position fonctionnelle fermée, appuie directement sur l'ouverture de réservoir (8) et/ou les moyens d'obturation(10).

7. Dispositif de recouvrement (2) selon au moins l'une des revendications précédentes, **caractérisé en ce que**
le dispositif d'étanchéité (12) est constitué d'une matière plastique ou d'un caoutchouc.

8. Dispositif de recouvrement (2) selon au moins l'une des revendications précédentes, **caractérisé en ce que**
le dispositif d'étanchéité (12) est agencé sur le bord de l'élément de recouvrement de forme plane (6).

9. Dispositif de recouvrement (2) selon au moins l'une des revendications précédentes, **caractérisé par**
au moins un dispositif de guidage (20), qui peut être fixé ou qui est fixé d'une part à l'élément de recouvrement (6) et d'autre part à l'unité de réservoir(4) ou à un élément de carrosserie, et qui guide le transfert de l'élément de recouvrement (6) depuis la position fonctionnelle fermée jusque dans la position fonctionnelle ouverte.

10. Dispositif de recouvrement (2) selon la revendication 9, **caractérisé en ce que** le dispositif de guidage (20) est constitué d'une charnière et/ou une articulation, à l'aide de laquelle l'élément de recouvrement (6) peut être rabattu, en particulier pivoté, depuis la position fonctionnelle fermée jusque dans la position fonctionnelle ouverte.

11. Unité de réservoir(4) d'un véhicule, ayant au moins une ouverture de réservoir (8), avec au moins des moyens d'obturation(10) fermant l'ouverture de réservoir(8) avec au moins un dispositif de recouvrement (2) selon l'une des revendications 1 à 10, comportant au moins un élément de recouvrement de forme plane (6), qui peut être déplacé depuis une position fonctionnelle fermée, dans laquelle l'élément de recouvrement (6) coiffe une ouverture de réservoir (8) de l'unité de réservoir(4) et/ou des moyens d'obturation (10) obturant l'ouverture de réservoir (8) de l'unité de réservoir (4), jusque dans une position fonctionnelle ouverte, dans laquelle l'ouverture de réservoir (8) et/ou les moyens d'obturation (10) sont accessibles depuis l'extérieur, et comportant au moins un dispositif d'étanchéité (12) par l'intermédiaire duquel, dans la position fonctionnelle fermée, un espace (14) situé entre l'élément de recouvrement (6) et l'unité de réservoir (4), et s'étendant transversalement ou en biais par rapport à l'ouverture de réservoir (8), et à distance de l'ouverture de réservoir (8), peut être ou est fermé, **caractérisé en ce que**
le dispositif d'étanchéité (12) est agencé au niveau de l'élément de recouvrement (6).

12. Véhicule ayant au moins une unité de réservoir (4) selon la revendication 11, comportant au moins un dispositif de recouvrement (2) selon l'une des revendications 1 à 10.
